(19) 

**Europäisches Patentamt**
**European Patent Office**
**Office européen des brevets**

(11) **EP 4 715 030 A1**

(12) **EUROPEAN PATENT APPLICATION**
published in accordance with Art. 153(4) EPC

(43) Date of publication:
**25.03.2026 Bulletin 2026/13**

(21) Application number: **24810197.4**

(22) Date of filing: **06.05.2024**

(51) International Patent Classification (IPC):
*C10G 33/04* (2006.01)   *C10G 33/06* (2006.01)
*C10G 31/10* (2006.01)   *C10G 53/02* (2006.01)
*B01D 17/038* (2006.01)   *B01D 17/04* (2006.01)
*B01D 17/05* (2006.01)   *E21B 43/40* (2006.01)

(86) International application number:
**PCT/CN2024/091157**

(87) International publication number:
**WO 2024/239950 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.05.2023 CN 202310565654**

(71) Applicants:
• **CHINA NATIONAL OFFSHORE OIL (CHINA) CO.,
LTD.**
**Tianjin 300459 (CN)**
• **BEIJING RESEARCH CENTER OF CNOOC
(CHINA) CO., LTD.**
**Beijing 100028 (CN)**

(72) Inventors:
• **WANG, Xiujun**
**Tianjin 300459 (CN)**

• **ZHANG, Jian**
**Tianjin 300459 (CN)**
• **HUA, Zhao**
**Tianjin 300459 (CN)**
• **DU, Hong**
**Tianjin 300459 (CN)**
• **JING, Bo**
**Tianjin 300459 (CN)**
• **CHEN, Jiaqing**
**Tianjin 300459 (CN)**
• **HOU, Shengzhen**
**Tianjin 300459 (CN)**
• **ZHAO, Chunhua**
**Tianjin 300459 (CN)**

(74) Representative: **Lorenz Seidler Gossel Part. mbB**
**Widenmayerstr. 23**
**80538 München (DE)**

(54) **PIPELINE-TYPE PRE-WATER-SEPARATION SYSTEM FOR OILFIELD PRODUCED FLUID**

(57)    The present invention relates to a pipeline-type pre-water separation system for oilfield produced fluid. The system comprises a tubular degasser, a tubular mixing demulsifier and a low-pressure loss tubular dynamic cyclone separator. A fluid phase outlet of the tubular degasser is connected to an inlet of the tubular mixing demulsifier. A gas phase outlet of the tubular degasser is connected to an inlet of an associated gas treatment system. The tubular mixing demulsifier consists of a strong-turbulence mixing section and a medium-turbulence demulsification and coalescence section. A first outlet of the tubular mixing demulsifier is connected to an inlet of the low-pressure loss tubular dynamic cyclone separator. An oil phase separated by the low-pressure loss tubular dynamic cyclone separator is discharged into a crude oil treatment system, and a separated water phase is discharged into a module for deep treatment of produced water and reinjection of qualified water. The system involves a simple process, a low manufacturing cost and a small occupied area of equipment, can be used for pre-water separation for land and offshore high-water content oilfields, and can also be used for pre-treatment of produced fluid of deep-sea oilfields.

Figure 1

## Description

## Technical Field

The invention relates to a pipeline-type pre-water separation system for oilfield produced fluid, belonging to the technical field of pre-treatment of oilfield produced fluid.

## Background Art

As oilfield exploitation enters the middle and late stages, the water content of produced fluid increases and oil-water emulsification worsens. Most of our country's old oilfields have entered a high-water content stage, with a water content of up to 90%. For the purpose of stabilizing or even increasing production, the volume of produced fluid has to be increased. The substantial increase in the volume of produced fluid and the increasingly serious oil-water emulsification bring two challenges to existing collection and transportation processing technology of oilfields:

(1) Oilfield water treatment equipment is often operating at full load or even overload due to the dual pressure of increased volume of production water and improved water treatment indicators. Conventional oil-water separation equipment based on the principle of gravity sedimentation requires a long hydraulic retention time during the separation process and is also bulky. For offshore production platforms, wherein the cost per unit area is high, the cost of expanding water treatment process is greatly limited, resulting in water treatment becoming a bottleneck for tapping the potential of old offshore oilfields.

(2) In order to ensure that the water output of the water treatment equipment meets the required standards when it is operating at full load or even overload, and not to bring too much impact to the water treatment system, the "water conservation" measure involving raising the oil-water interface position of the first or second three-phase separator is adopted during most of the on-site production and operation processes of the oilfield. However, as the interface position increases, the actual hydraulic retention time in the oil phase separation zone decreases and the water content in the crude oil at the oil outlet increases. The increase in the water content in crude oil would not only cause a large amount of heating energy to be wasted into water with a higher thermal enthalpy, but also lead to problems such as the electric dehydrator working less stably, which in turn affects the stability of the entire crude oil production process.

Tapping the potential of old oilfields is an important area of development, and striving to maintain stable production is a significant practical problem for oilfield developers. There is an urgent need to innovate in terms of oil and gas gathering, transportation and processing processes to overcome the shortcomings of existing water treatment system-related equipment, such as long hydraulic retention time, low separation efficiency, and poor energy efficiency. This will provide technical support for reducing oilfield cost, improving efficiency and enabling green and low-carbon development, and provide technical reserves for the development of new offshore oilfields, especially the development of deep-water oilfields at the same time.

Currently, the commonly used methods for pre-water separation of produced fluid in industry comprise gravity sedimentation and centrifugal separation. An elevation-type oil-water separator based on gravity sedimentation makes full use of the advantages of a large oil-water interface coverage area of horizontal separators and a long separation time of vertical separators. Chinese patents CN206715377U and CN212024989U disclose using an elevation-type oil-water separator as a pre-water separation device in a system for treating high-water produced fluid. However, the elevation-type oil-water separator still uses gravity sedimentation to separate oil and water, and the defects of a long hydraulic retention time and a large equipment volume cannot be avoided. The hydrocyclone technology based on centrifugal separation uses the centrifugal force generated by the cyclone to separate oil-water mixtures with different densities. According to different conditions of the fluids involved, the hydrocyclones can be divided into three types: pre-water separation type, crude oil dehydration type and oil removal type. Chinese patent CN106433764A discloses a short-process pre-water separation process for oilfield produced fluids, which uses three stages including pre-water separation, oil-removal static hydrocyclone and trapezoidal tube separator for pre-water separation. Due to the lack of a degassing device, this process can only be used in low-gas oilfields. Furthermore, the multi-stage hydrocyclones and trapezoidal tube separators result in significant pressure losses, requiring two-stage pressurization and leading to a high energy consumption and a long process. Additionally, there is a lack of consideration for dispersed phase demulsification.

Existing processes are unable to meet the needs of oilfield produced fluid treatment, especially for offshore oilfields with expensive platforms, due to the new problems of high water content and serious oil-water emulsification in produced fluid. Therefore, there is a need to develop a pre-water separation process for oilfield produced fluid given the new challenges faced by oilfields.

## Summary of the invention

In view of the problem of increased water content of produced fluid from old offshore oilfields, which causes a heavy load on the in-service water treatment system, the present invention provides a pipeline-type pre-water separation system for oilfield produced fluid. The system realizes the pre-water separation operation in a tubular way, and while ensuring the water separation rate, the residual pressure of the incoming fluid can be used to complete degassing and pre-water separation. The system involves a simple process, a low manufacturing cost and a small occupied area of equipment, can be used for pre-water separation for land and offshore high-water content oilfields, and can also be used for pre-treatment of produced fluid of deep-sea oilfields.

For the purpose of achieving the above objective, the present invention adopts the following technical solutions:

A pipeline-type pre-water separation system for oilfield produced fluid, characterized by comprising: a tubular degasser, a tubular mixing demulsifier and a low-pressure loss tubular dynamic cyclone separator;
a fluid phase outlet of the tubular degasser is connected to an inlet of the tubular mixing demulsifier; and a gas phase outlet of the tubular degasser is connected to an inlet of an associated gas treatment system;
the tubular mixing demulsifier consists of a strong-turbulence mixing section and a medium-turbulence demulsification and coalescence section connected in series, and a first outlet of the tubular mixing demulsifier is connected to an inlet of the low-pressure loss tubular dynamic cyclone separator; and
an oil phase separated by the low-pressure loss tubular dynamic cyclone separator is discharged into a crude oil treatment system, and a separated water phase is discharged into a module for deep treatment of produced water and reinjection of qualified water.

In the pipeline-type pre-water separation system for oilfield produced fluid, preferably, the demulsification and coalescence section of the tubular mixing demulsifier comprises a plurality of large-diameter sections and reduced-diameter sections which are alternately connected in series.

In the pipeline-type pre-water separation system for oilfield produced fluid, preferably, the diameter of the reduced-diameter section $d = 0.71\sqrt{Q}$, wherein Q is the flow rate of the produced fluid to be treated.

In the pipeline-type pre-water separation system for oilfield produced fluid, preferably, the internal cavity of the demulsification and coalescence section of the tubular mixing demulsifier is composed of a plurality of elliptical flow field turbulence intensity regulating components connected in series.

In the pipeline-type pre-water separation system for oilfield produced fluid, preferably, the ratio of the major axis to the minor axis of the elliptical flow field turbulence intensity regulating component is 2-3, the thickness of the flow-facing surface thereof is 0.1-0.3 time the inner diameter, and the thickness of the flow-back surface is 0.05-0.2 mm.

In the pipeline-type pre-water separation system for oilfield produced fluid, preferably, the spiral direction of the spiral blade cascades is consistent with the rotation direction of the rotation hub.

In the pipeline-type pre-water separation system for oilfield produced fluid, preferably, the low-pressure loss tubular dynamic cyclone separator is provided with a swirl element therein, and the swirl element comprises a rotation hub and rotating blade cascades uniformly distributed along the circumference of the rotation hub.

In the pipeline-type pre-water separation system for oilfield produced fluid, preferably, the rotating blade cascades are spiral blade cascades, and the screw pitch between two adjacent rotating blade cascades is 1 to 2 times the inner diameter.

In the pipeline-type pre-water separation system for oilfield produced fluid, preferably, the rotation hub is a three-section rotation hub, which comprises two conical rotation hub sections and a cylindrical rotation hub section disposed between the two conical rotation hub sections.

In the pipeline-type pre-water separation system for oilfield produced fluid, preferably, the tubular degasser comprises a vertical tube column structured gas-fluid cyclone separator and a horizontal guide vane gas-fluid cyclone separator connected in series.

The present invention adopts the above technical solutions, which have the following advantages:

1. The tubular degasser of the present invention adopts a two-stage combination of a vertical tube column structured gas-fluid cyclone separator and a horizontal guide vane gas-fluid cyclone separator, which is applicable to a wide range of working conditions with a gas content of 10% to 85%, making it suitable for different oilfields and different production stages in terms of gas content. The gas content of the separated fluid phase is less than 2%, meeting the requirements of subsequent cyclone pre-water separation equipment.
2. The tubular demulsifier of the present invention is composed of a strong-turbulence mixing section and a medium-turbulence demulsification and coalescence section. The mixing section adopts a conventional static mixer, and the demulsification and coalescence section controls the local pipe flow velocity to be a certain flow velocity, such as 2.5 m/s, by adjusting the pipe flow diameter according to the hydraulic conditions required for demulsification of the produced fluid, so as to form a flow field with a medium turbulence intensity, promote the collision and coalescence of dispersed oil droplets with a particle size of less than 200 μm, improve the demulsification efficiency of an agent, and shorten the demulsification time.

3. The swirl element in the low-pressure loss tubular dynamic cyclone separator of the present invention is a rotating blade cascade having pumping function. While achieving oil-water separation, the present invention uses the pumping function of the element to compensate for the pressure loss required for separation. The pressure loss during the separation process of the low-pressure loss tubular dynamic cyclone separator is minimal or even zero, thereby achieving the pre-water separation operation of the produced fluid using the residual process pressure.

4. The pipeline-type pre-water separation system for oilfield produced fluid of the present invention utilizes three types of compact tubular equipment to realize operations such as degassing, dosing, mixing, demulsification and pre-water separation, thereby realizing tubular pre-treatment of oilfield produced fluid with a simple process, high energy efficiency and small equipment footprint.

DESCRIPTION OF FIGURES

Figure 1 shows a process flow chart of a pipeline-type pre-water separation system for oilfield produced fluid as provided by an example of the present invention;

Figure 2 shows a schematic diagram of a tubular mixing demulsifier as provided by this example of the present invention, wherein a is a cross-sectional view of a mixing section in the tubular mixing demulsifier, and b is a stereoscopic view of a demulsification and coalescence section in the tubular mixing demulsifier;

Figure 3 shows a schematic diagram of a swirl element in a low-pressure loss tubular dynamic cyclone separator as provided by this example of the present invention;

Figure 4 shows a graph of the regularity of change in the gas content at the fluid outlet and the fluid content at the gas outlet in the tubular degasser as provided in this example of the present invention;

The reference numbers in the figures are as follows:

1- tubular degasser; 2- tubular mixing demulsifier; 3- low-pressure loss tubular dynamic cyclone separator, 301- conical rotation hub section, 302- cylindrical rotation hub section, 303- rotating blade cascades.

DETAILED DESCRIPTION

In order to make the purpose, technical solutions and advantages of the present invention clearer, the technical solutions of the present invention are described clearly and completely below. Obviously, the described examples are only a part of the examples of the present invention. All other examples obtained by those persons skilled in the art without creative work are within the scope of the present invention, based on the examples of the present invention.

Unless otherwise defined, the technical or scientific terms used in the present invention shall have the usual meanings understood by those with ordinary skills in the field to which the present invention belongs. Words such as "first", "second", "third", "fourth" and similar terms used in the present invention do not indicate any order, quantity or importance, but are only used to distinguish different components. Words such as "include" or "comprise" and the like mean that the elements or objects appearing before the word include the elements or objects listed after them and their equivalents, without excluding other elements or objects. Words such as "connect" or "connected" and the like are not limited to physical or mechanical connections, but may also include electrical connections, whether direct or indirect.

In view of the problem of increased water content of produced fluid from old offshore oilfields, which causes a heavy load on the in-service water treatment system, the present invention provides a pipeline-type pre-water separation system for oilfield produced fluid. The system realizes the pre-water separation operation in a tubular way, and while ensuring the water separation rate, the residual pressure of the incoming fluid can be used to complete degassing and pre-water separation. The system involves a simple process, a low manufacturing cost and a small occupied area of equipment, can be used for pre-water separation for land and offshore high-water content oilfields, and can also be used for pre-treatment of produced fluid of deep-sea oilfields.

The technical solutions of the present invention are described in detail below with reference to specific examples.

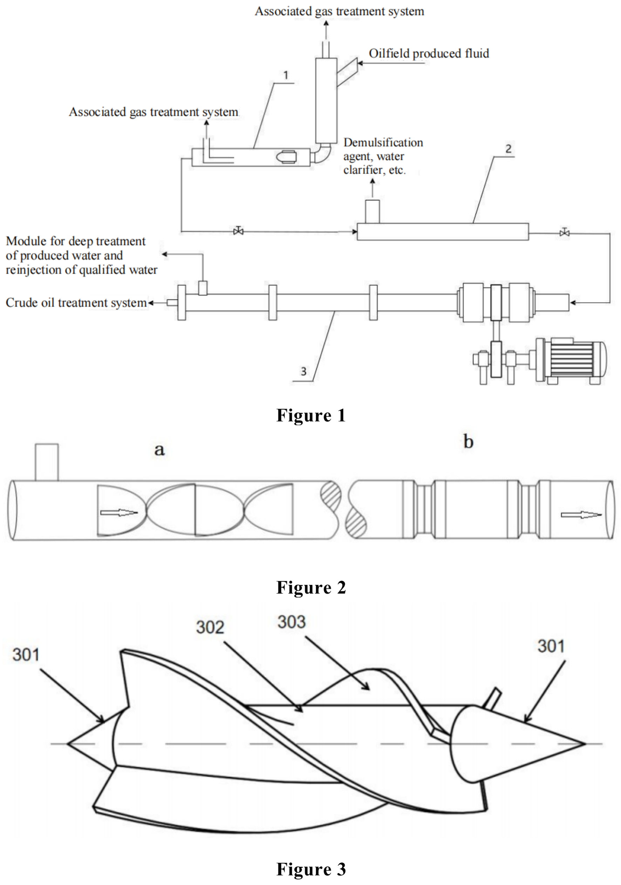

As shown in Figure 1, the pipeline-type pre-water separation system for oilfield produced fluid involved in the present invention comprises: a tubular degasser 1, a tubular mixing demulsifier 2 and a low-pressure loss tubular dynamic cyclone separator 3;

a fluid phase outlet of the tubular degasser 1 is connected to an inlet of the tubular mixing demulsifier 2; and a gas phase outlet of the tubular degasser 1 is connected to an inlet of an associated gas treatment system;

the tubular mixing demulsifier 2 consists of a strong-turbulence mixing section and a medium-turbulence demulsification and coalescence section connected in series, and a first outlet of the tubular mixing demulsifier 2 is connected to an inlet of the low-pressure loss tubular dynamic cyclone separator 3; and

an oil phase separated by the low-pressure loss tubular dynamic cyclone separator 3 is discharged into a crude oil treatment system, and a separated water phase is discharged into a module for deep treatment of produced water and reinjection of qualified water.

Furthermore, the tubular degasser 1 adopts a two-stage combination of a vertical tube column structured gas-fluid cyclone separator and a horizontal guide vane gas-fluid cyclone separator, which is applicable to a wide range of working conditions with a gas content of 10% to 85%, making it suitable for different oilfields and different production stages in terms of gas content.

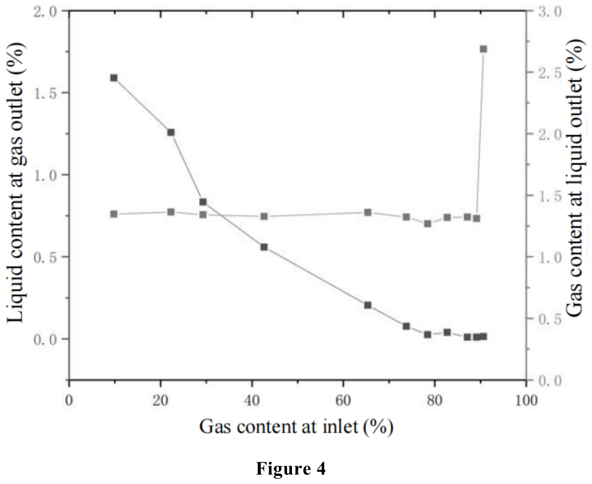

The pipeline-type pre-water separation system for oilfield produced fluid of the present invention adopts a two-stage series combination of a vertical tube column structured gas-fluid cyclone separator and a horizontal guide vane gas-fluid cyclone separator to complete gas-fluid separation. This makes full use of the advantages of good high-gas content treating effects of the vertical column structured gas-fluid cyclone separator and a high separation accuracy of the horizontal guide vane gas-fluid separator. At the same time, it can prevent the gas-fluid interface from being difficult to control when the vertical tube column structured gas-fluid cyclone separator operates at a low gas content, and prevent the horizontal guide vane gas-fluid separator from being easily affected by the slug flow when it treats high- and low-gas content gas-fluid mixtures, resulting in unstable gas core. When the gas content of the incoming fluid varies between 10% and 90%, it can be seen from the separation performance of the two gas-fluid cyclone separators that have been published that, the change law of the gas content at the fluid outlet and the fluid content at the gas outlet of the tubular degasser 1 composed of the two-stage series is as shown in Figure 4. When the gas content at the inlet is less than 90%, the gas content at the fluid outlet is stable at below 1.5%, which meets the the expected process requirements, and the total pressure difference is less than 0.1 MPa.

As shown in Figure 2, the tubular mixing demulsifier 2 consists of a mixing section with a strong turbulence (when the maximum Reynolds number is above $2 \times 10^5$, it is called a strong turbulence ) and a demulsification and coalescence section with a medium turbulence (when the maximum Reynolds number does not exceed $3 \times 10^4$, it is called a medium turbulence). The mixing section uses a conventional SK type static mixer to complete the rapid and uniform mixing of a reagent and the produced fluid, as shown in a of Figure 2. For produced fluids with a water content of up to 90%, the currently published application data show that the pressure loss of conventional SK type static mixer is about 0.05 MPa.

As shown in b of Figure 2, after a fluid enters the demulsification and coalescence section, a pulse flow field with a medium turbulence intensity of a Reynolds number not greater than $3 \times 10^4$ is formed under the action of an internal component with gradually changing cross-sectional areas. Under the action of the pulse flow with a medium turbulence intensity, small-particle dispersed phases have the collision probability therebetween increased and an increased coalescence rate, and no re-emulsification of larger-particle dispersed phases is caused at the same time. The demulsification and coalescence section is 2 meters (or other sizes) long, and a necking-down is set every 0.2 meters (other interval sizes are also feasible). Under the working condition of the flow rate of fluid in the tube being 2.5 m/s, the pulsating turbulent flow field is conducive to the rapid coalescence of dispersed oil phases with a particle size of less than 200 μm. According to this principle, the diameter d at the necking-down is designed to

$$d = 0.71\sqrt{Q}$$

in m at the necking-down; wherein Q is the flow rate in m³/s of the produced fluid to be treated, and the pressure loss of the demulsification and coalescence section is about 0.02 MPa. The produced fluid after demulsification process enters the low-pressure loss tubular dynamic cyclone separator 3.

As shown in a of Figure 2, a plurality of elliptical flow field turbulence intensity regulating components connected in series are installed inside the mixing section of the tubular mixing demulsifier 2. The ratio of the major axis to the minor axis of the elliptical flow field turbulence intensity regulating component is 2-3, and the thickness of the flow-facing surface is 0.2 time the inner diameter of the tube of the mixing section of the tubular mixing demulsifier 2 (the tubular mixing demulsifier 2 is composed of a mixing section and a demulsification and coalescence section connected in series, the inner and outer diameters of the large diameter section in the demulsification and coalescence section are the same as the inner and outer diameters of the mixing section, the elliptical flow field turbulence intensity regulating component is welded in the tube body of the mixing section, and the thickness of the flow-facing surface depends on the inner diameter of the tube body of the mixing section), and the thickness of the flow-back surface is 0.1 mm. After the fluid enters the demulsification and coalescence section, a pulse flow field with a medium turbulence intensity of a Reynolds number not greater than $3 \times 10^4$ is formed under the action of an internal component with gradually changing cross-sectional areas. Under the action of the pulse flow with a medium turbulence intensity, small-particle dispersed phases have the collision probability therebetween increased and an increased coalescence rate, and no re-emulsification of larger-particle dispersed phases is caused at the same time.

As shown in Figure 3, a low-pressure loss tubular dynamic cyclone separator 3 is provided therein with a swirl element, an inlet, an oil discharge port and a water discharge port, wherein the swirl element includes a rotation hub and rotating blade cascades 303 uniformly distributed along the circumference of the rotation hub.

While realizing oil-water separation, the rotating blade cascades 303 uses the pumping function thereof to compensate for the pressure loss required for the separation process, further realizing the pre-water separation operation of the produced fluid without a booster pump.

Specifically, the produced fluid entering the low-pressure loss tubular dynamic cyclone separator 3 simultaneously generates a high-speed rotation and a certain axial pushing effect under the driving effect of the rotating blade cascades 303. The cyclone generates centrifugal force, which causes the heavy phase in the produced fluid to be separated to migrate outward at a certain radial speed, the light phase to converge toward the center and be discharged from the oil discharge port into a crude oil treatment system, and the separated water phase to enter the module for deep treatment of produced water and reinjection of qualified water. The axial pushing effect of the rotating blade cascades 303 can make up for the pressure loss during the separation process of the low-pressure loss tubular dynamic cyclone separator 3, thereby realizing the pre-water separation operation of the produced fluid without a booster pump. Under the working condition that the gas content of the incoming fluid does not exceed 2%, when its water content is 90%, the pre-water separation rate can reach 60% and the oil content at the water outlet can be reduced to 1000 mg/L, which meet the water treatment indicator requirements of offshore oilfield pre-treatment equipment.

Specific oil-water separation process is as follows: oil and water phases are immiscible. For a produced fluid containing 90% water (10% oil), oil is dispersed in water in the form of particles. Due to different densities of the two and the oil phase having a smaller density, the oil phase with a smaller density will float under the action of gravity acceleration. Based on the same principle, the oil phase would converge to the center under the action of centrifugal force, and the converged oil phase would form an oil core. An oil collecting pipe is installed in the center of the end of the separator, and an annular structure formed between the outer diameter of the oil collecting pipe and the inner diameter of the separator outlet pipe is for draining water. When the diameter of the oil collecting pipe is slightly larger than the size of the oil core, the oil core gathered in the center flows into the oil collecting pipe under the action of axial pushing force, and the water phase enters a water drainage pipe from the annular area.

In some preferred embodiments of the present invention, the blade cascade has a three-section structure, including two conical rotation hub sections 301 and a cylindrical rotation hub section 302 disposed between the two conical rotation hub sections 301. The two conical rotation hub sections 301 at the inlet and outlet allow the fluid to flow into and out of the blade cascade more stably, preventing fluid disturbance.

Furthermore, the rotating blade cascades 303 are spiral blade cascades, and the screw pitch between two adjacent rotating blade cascades 303 is 1 time the inner diameter of the rotation drum.

The pipeline-type pre-water separation system for oilfield produced fluid of the present invention only requires an incoming fluid pressure of higher than 0.2 MPa to achieve gas-fluid separation, dosing and demulsification, and pre-separation of 60% of the water phase with a short process flow and a high energy efficiency. In addition, all the equipment has a tubular structure and a small footprint.

The pipeline-type pre-water separation system for oilfield produced fluid provided by the present invention comprises a tubular degasser 1, a tubular mixing demulsifier 2 and a low-pressure loss tubular dynamic cyclone separator 3. The tubular degasser 1 is composed of a horizontal guide vane cyclone gas-fluid separator and a vertical tube column structured gas-fluid cyclone separator, which can be applied to a wide range of working conditions with a gas content of 10% to 85%, making it suitable for different oilfields and different production stages in terms of gas content. The separated natural gas with a fluid content of less than 2% is discharged into an associated gas treatment system, and the fluid phase with a gas content of less than 2% is added with a reagent and demulsified by the tubular mixing demulsifier 2 and then enters the low-pressure loss tubular dynamic cyclone separator 3 for water separation. The tubular mixing demulsifier 2 can not only complete the mixing of the reagent and the produced fluid, but also construct the optimal hydraulic conditions for demulsification and agglomeration of the dispersed oil phase by using the change in the pipe diameter, thereby giving full play to the role of the reagent. The low-pressure loss tubular dynamic cyclone separator 3 uses a swirl element with a pumping function, which is driven by an electric motor and uses the pumping action of the blades to compensate for the pressure loss during the separation process. Therefore, the pipeline-type pre-water separation system for oilfield produced fluid proposed by the present invention realizes pre-water separation operations in a tubular way, and while ensuring the water separation rate, the residual pressure of the incoming fluid can be used to complete degassing and pre-water separation. The system involves a simple process, a low manufacturing cost and a small occupied area of equipment, can be used for pre-water separation for land and offshore high-water content oilfields, and can also be used for pre-treatment of produced fluid of deep-sea oilfields.

Finally, it should be noted that the above examples are only used to illustrate the technical solutions of the present invention, rather than to limit it. Although the present invention has been described in detail with reference to the aforementioned examples, those skilled in the art should understand that they can still modify the technical solutions described in the aforementioned examples, or make equivalent replacements for some of the technical features therein. However, these modifications or replacements do not deviate the essence of the corresponding technical solutions from the spirit and scope of the technical solutions of the examples of the present invention.

**Claims**

1.  A pipeline-type pre-water separation system for oilfield produced fluid, **characterized by** comprising: a tubular degasser (1), a tubular mixing demulsifier (2) and a low-pressure loss tubular dynamic cyclone separator (3);

    a fluid phase outlet of the tubular degasser (1) is connected to an inlet of the tubular mixing demulsifier (2); and a gas phase outlet of the tubular degasser (1) is connected to an inlet of an associated gas treatment system;
    the tubular mixing demulsifier (2) consists of a strong-turbulence mixing section and a medium-turbulence demulsification and coalescence section connected in series, and a first outlet of the tubular mixing demulsifier (2) is connected to an inlet of the low-pressure loss tubular dynamic cyclone separator (3); and
    an oil phase separated by the low-pressure loss tubular dynamic cyclone separator (3) is discharged into a crude oil treatment system, and a separated water phase is discharged into a module for deep treatment of produced water and reinjection of qualified water.

2.  The pipeline-type pre-water separation system for oilfield produced fluid according to claim 1, **characterized in that** the demulsification and coalescence section of the tubular mixing demulsifier (2) comprises a plurality of large-diameter sections and reduced-diameter sections which are alternately connected in series.

3.  The pipeline-type pre-water separation system for oilfield produced fluid according to claim 2, **characterized in that** the diameter of the reduced-diameter section $d = 0.71\sqrt{Q}$, wherein Q is the flow rate of the produced fluid to be treated.

4.  The pipeline-type pre-water separation system for oilfield produced fluid according to claim 2, **characterized in that** the internal cavity of the mixing section of the tubular mixing demulsifier (2) is composed of a plurality of elliptical flow field turbulence intensity regulating components connected in series.

5.  The pipeline-type pre-water separation system for oilfield produced fluid according to claim 4, **characterized in that** the ratio of the major axis to the minor axis of the elliptical flow field turbulence intensity regulating component is 2-3.

6.  The pipeline-type pre-water separation system for oilfield produced fluid according to claim 4, **characterized in that** the thickness of the flow-facing surface of the elliptical flow field turbulence intensity regulating component is 0.1-0.3 time the inner diameter of the mixing section of the tubular mixing demulsifier (2), and the thickness of the flow-back surface is 0.05-0.2 mm.

7.  The pipeline-type pre-water separation system for oilfield produced fluid according to claim 1, **characterized in that** the low-pressure loss tubular dynamic cyclone separator (3) is provided with a swirl element therein, and the swirl element comprises a rotation hub and rotating blade cascades (303) uniformly distributed along the circumference of the rotation hub.

8.  The pipeline-type pre-water separation system for oilfield produced fluid according to claim 7, **characterized in that** the rotating blade cascades (303) are spiral blade cascades, and the screw pitch between two adjacent rotating blade cascades (303) is 1 to 2 times the inner diameter.

9.  The pipeline-type pre-water separation system for oilfield produced fluid according to claim 8, **characterized in that** the spiral direction of the spiral blade cascades is consistent with the rotation direction of the rotation hub.

10. The pipeline-type pre-water separation system for oilfield produced fluid according to claim 7, **characterized in that** the rotation hub is a three-section rotation hub, which comprises two conical rotation hub sections (301) and a cylindrical rotation hub section (302) disposed between the two conical rotation hub sections (301).

**Figure 1**

**Figure 2**

**Figure 3**

**Figure 4**

## INTERNATIONAL SEARCH REPORT

| International application No. |
| --- |
| **PCT/CN2024/091157** |

| A. | CLASSIFICATION OF SUBJECT MATTER |
| --- | --- |

C10G 33/04(2006.01)i; C10G 33/06(2006.01)i; C10G 31/10(2006.01)i; C10G 53/02(2006.01)i; B01D 17/038(2006.01)i; B01D 17/04(2006.01)i; B01D 17/05(2006.01)i; E21B 43/40(2006.01)i

According to International Patent Classification (IPC) or to both national classification and IPC

| B. | FIELDS SEARCHED |
| --- | --- |

Minimum documentation searched (classification system followed by classification symbols)

C10G, B01D, E21B

Documentation searched other than minimum documentation to the extent that such documents are included in the fields searched

Electronic data base consulted during the international search (name of data base and, where practicable, search terms used)

CNABS, CNTXT, DWPI, CNKI: 油田, 采出液, 管, 脱气, 破乳, 旋流分离器, 湍流, 回注, oil field, crude oil, petroleum, tube, degas+, demulsifi+, cyclone separator, turbulent flow, reinjection.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116286080 A (CHINA NATIONAL OFFSHORE OIL CORP. et al.) 23 June 2023 (2023-06-23)<br>claims 1-10 | 1-10 |
| Y | CN 107882545 A (SINOPEC CORP. et al.) 06 April 2018 (2018-04-06)<br>description, paragraph 48, and figures 1-5 | 1-2, 7-10 |
| A | CN 107882545 A (SINOPEC CORP. et al.) 06 April 2018 (2018-04-06)<br>entire document | 3-6 |
| Y | CN 111471482 A (EAST CHINA UNIVERSITY OF SCIENCE AND TECHNOLOGY) 31 July 2020 (2020-07-31)<br>description, paragraphs 27-43, and figures 1-3 | 1-2, 7-10 |
| A | CN 111471482 A (EAST CHINA UNIVERSITY OF SCIENCE AND TECHNOLOGY) 31 July 2020 (2020-07-31)<br>entire document | 3-6 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 July 2024** | **24 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/091157** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 104707364 A (CHINA NATIONAL OFFSHORE OIL CORP. et al.) 17 June 2015 (2015-06-17) <br> entire document | 1-10 |
| A | CN 104389578 A (BEIJING UNIVERSITY OF CHEMICAL TECHNOLOGY) 04 March 2015 (2015-03-04) <br> entire document | 1-10 |
| A | CN 106590731 A (PETROCHINA CO., LTD.) 26 April 2017 (2017-04-26) <br> entire document | 1-10 |
| A | CN 106693447 A (INSTITUTE OF MECHANICS, CHINESE ACADEMY OF SCIENCES) 24 May 2017 (2017-05-24) <br> entire document | 1-10 |
| A | CN 113372946 A (JIANGSU NUOMENG HYDROGEN ENERGY TECHNOLOGY CO., LTD. et al.) 10 September 2021 (2021-09-10) <br> entire document | 1-10 |
| A | CN 114164019 A (BEIJING INSTITUTE OF PETROCHEMICAL TECHNOLOGY) 11 March 2022 (2022-03-11) <br> entire document | 1-10 |
| A | US 2011240524 A1 (FENTON MARCUS BRIAN MAYHALL) 06 October 2011 (2011-10-06) <br> entire document | 1-10 |
| A | US 2012097542 A1 (ANEKAL SAMARTHA G et al.) 26 April 2012 (2012-04-26) <br> entire document | 1-10 |
| A | US 2013161259 A1 (GENERAL ELECTRIC COMPANY et al.) 27 June 2013 (2013-06-27) <br> entire document | 1-10 |

Form PCT/ISA/210 (second sheet) (July 2022)

## INTERNATIONAL SEARCH REPORT
### Information on patent family members

International application No.

**PCT/CN2024/091157**

| Patent document cited in search report | | | Publication date (day/month/year) | Patent family member(s) | | | Publication date (day/month/year) |
|---|---|---|---|---|---|---|---|
| CN | 116286080 | A | 23 June 2023 | CN | 116286080 | B | 11 August 2023 |
| CN | 107882545 | A | 06 April 2018 | None | | | |
| CN | 111471482 | A | 31 July 2020 | None | | | |
| CN | 104707364 | A | 17 June 2015 | CN | 104707364 | B | 04 January 2017 |
| CN | 104389578 | A | 04 March 2015 | None | | | |
| CN | 106590731 | A | 26 April 2017 | CN | 106590731 | B | 10 August 2018 |
| CN | 106693447 | A | 24 May 2017 | None | | | |
| CN | 113372946 | A | 10 September 2021 | CN | 113372946 | B | 11 March 2022 |
| CN | 114164019 | A | 11 March 2022 | CN | 114164019 | B | 21 February 2023 |
| US | 2011240524 | A1 | 06 October 2011 | CA | 2739338 | A1 | 15 April 2010 |
| | | | | AU | 2009302136 | A1 | 15 April 2010 |
| | | | | WO | 2010041080 | A1 | 15 April 2010 |
| | | | | GB | 0818362 | D0 | 12 November 2008 |
| | | | | KR | 20110069095 | A | 22 June 2011 |
| | | | | BRPI | 0920918 | A2 | 17 May 2016 |
| | | | | ZA | 201103310 | B | 25 July 2012 |
| | | | | EP | 2361129 | A1 | 31 August 2011 |
| | | | | JP | 2012505074 | A | 01 March 2012 |
| US | 2012097542 | A1 | 26 April 2012 | US | 8815068 | B2 | 26 August 2014 |
| US | 2013161259 | A1 | 27 June 2013 | FR | 2984755 | A1 | 28 June 2013 |
| | | | | FR | 2984755 | B1 | 10 January 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 206715377 U
- CN 212024989 U
- CN 106433764 A